# EUROPEAN PATENT APPLICATION

(11) **EP 2 925 009 A1**
(43) Date of publication of application: **30.09.2015**
(21) Application number: 14305430.2
(22) Date of filing: 26.03.2014
(51) Int. Cl.: H04N 21/442

(54) **Viewer engagement estimating system and method of estimating viewer engagement**

(71) Applicant: Thomson Licensing, 92130 Issy-les-Moulineaux (FR)
(72) Inventor: Howson, Christopher, 35576 Cesson-Sévigné (FR); Gautier, Eric, 35576 Cesson-Sévigné (FR)
(74) Representative: Huchet, Anne

(57) **Abstract**

A viewer engagement estimating system includes a physical data analyzing unit that analyzes physical data obtained by a sensor included in a mobile terminal of a viewer of a TV program to determine a condition of the physical data; an application data analyzing unit that analyzes user application data handled by the viewer of the TV program through the mobile terminal while the TV program is being broadcasted to determine a condition of user application data; and a viewer engagement estimating unit that estimates a level of engagement with the TV program of the viewer based on the conditions of the physical data and the user application data analyzed by the physical data analyzing unit and the application data analyzing unit, respectively.

## Description

### Technical Field

The present disclosure relates to a viewer engagement estimating system and a method of estimating a viewer engagement.

### Background Art

Information regarding levels of engagement with TV programs of viewers are important for broadcasters and advertisers and ultimately to personalize services for the viewers themselves.

One approach that has been proposed to automatically determine a level of engagement with a TV program of a viewer relies on filming the viewer and extracting relevant features. US2013/0232515A1 discloses an approach in which a feature is extracted from a physical sensor in a computing device (a tablet or phone) and used as an indicator of a level of engagement with a TV program.

Further, US2013/0145390A1 discloses a system for rewarding people for watching or otherwise engaging in various forms of media and entertainment to promote loyalty to or improve recognition of all entertainment, while collecting useful data about the media consumption habits as well as the rewards consumption patterns associated with those consumers.

However, it was not sufficient to determine a level of engagement with a TV program of a viewer just by a physical sensor.

On the other hand, there is a report on an exploration of social activity around television (Descrambling the Social TV Echo Chamber, Narasimhan & Vasudevan, ACM *MCSS'12,* June 25, 2012). However, the social activity of an individual viewer is not analyzed sufficiently.

### Summary

The present invention is made in light of the above problems, and provides a technique of precisely estimating a level of engagement with a TV program of a viewer.

According to an embodiment, there is provided a viewer engagement estimating system including a physical data analyzing unit that analyzes physical data obtained by a sensor included in a mobile terminal of a viewer of a TV program to determine a condition of the physical data; an application data analyzing unit that analyzes user application data handled by the viewer of the TV program through the mobile terminal while the TV program is being broadcasted to determine a condition of the user application data; and a viewer engagement estimating unit that estimates a level of engagement with the TV program of the viewer based on the conditions of the physical data and the user application data analyzed by the physical data analyzing unit and the application data analyzing unit, respectively.

According to another embodiment, there is provided a method of estimating a viewer engagement, including analyzing physical data obtained by a sensor included in a mobile terminal of a viewer of a TV program to determine a condition of the physical data; analyzing user application data handled by the viewer of the TV program through the mobile terminal while the TV program is being broadcasted to determine a condition of application data; and estimating a level of engagement with the TV program of the viewer based on the conditions of the physical data and the user application data analyzed in the analyzing physical data and in the analyzing user application data, respectively.

Note that also arbitrary combinations of the above-described constituents, and any exchanges of expressions in the present invention, made among methods, devices, systems and so forth, are valid as embodiments of the present invention.

### Brief Description of Drawings

Other objects, features and advantages of the present invention will become more apparent from the following detailed description when read in conjunction with the accompanying drawings.
Fig. 1 is a block diagram illustrating an example of a functional structure of a viewer engagement estimating system of an embodiment;
Fig. 2 is a block diagram illustrating an example of a hardware structure of a mobile terminal of the embodiment;
Fig. 3 is a block diagram illustrating an example of a hardware structure of a set-top box terminal or a web server of the embodiment;
Fig. 4 is a view illustrating an example of a condition table;
Fig. 5 is a sequence diagram illustrating an example of a process of the embodiment; and
Fig. 6 is a block diagram illustrating another example of a functional structure of the viewer engagement estimating system of the embodiment.

### Description of Embodiments

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

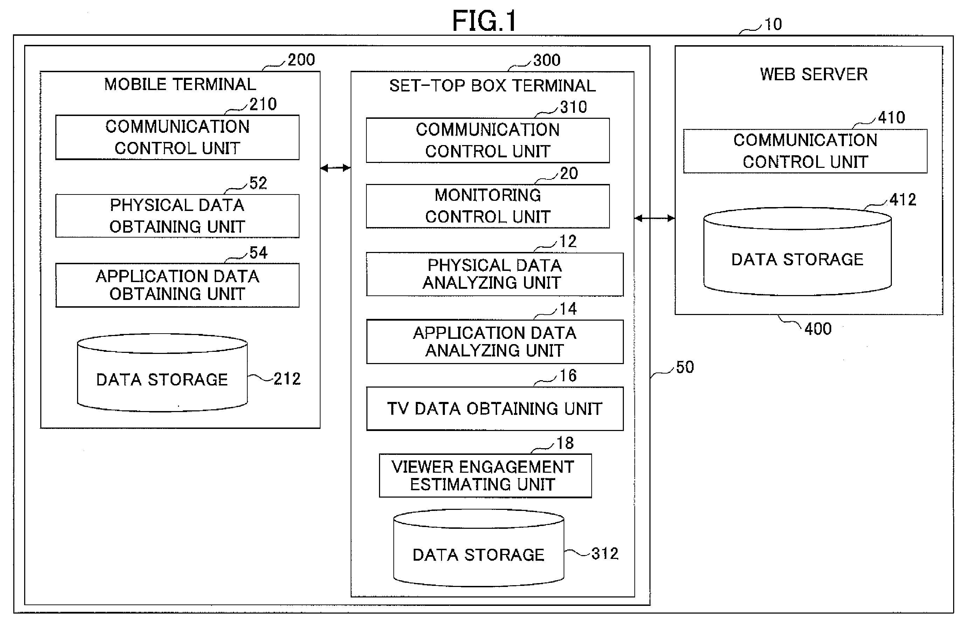

Fig. 1 is a block diagram illustrating an example of a functional structure of a viewer engagement estimating system 10 of an embodiment.

With the widespread adoption of mobile terminals such as laptops, tablet terminals, smartphones or the like, many viewers of TV programs who sat in front of their TV set are now indulging in "second screen" activities. Thus, according to the embodiment, the viewer engagement estimating system 10 estimates a level of engagement with a TV program of a viewer who is watching the TV program based on user application data handled by the viewer while the TV program is being broadcasted in addition to physical data.

The viewer engagement estimating system 10 includes a mobile terminal 200, a set-top box terminal 300 and a web server 400. The mobile terminal 200 and the set-top box terminal 300 are provided at each viewer side 50, such as each viewer's home (room) or the like.

The mobile terminal 200 and the set-top box terminal 300 communicate with each other via a home LAN, WiFi or the like. The mobile terminal 200 and the web server 400, or the set-top box terminal 300 and the web server 400 communicate via an access point (not illustrated in the drawings) such as a mobile base station, a Wi-Fi station or the like and a network such as the INTERNET or the like.

Before describing the functional structure of the viewer engagement estimating system 10 in detail, hardware structures of the mobile terminal 200, the set-top box terminal 300 and the web server 400 are explained.

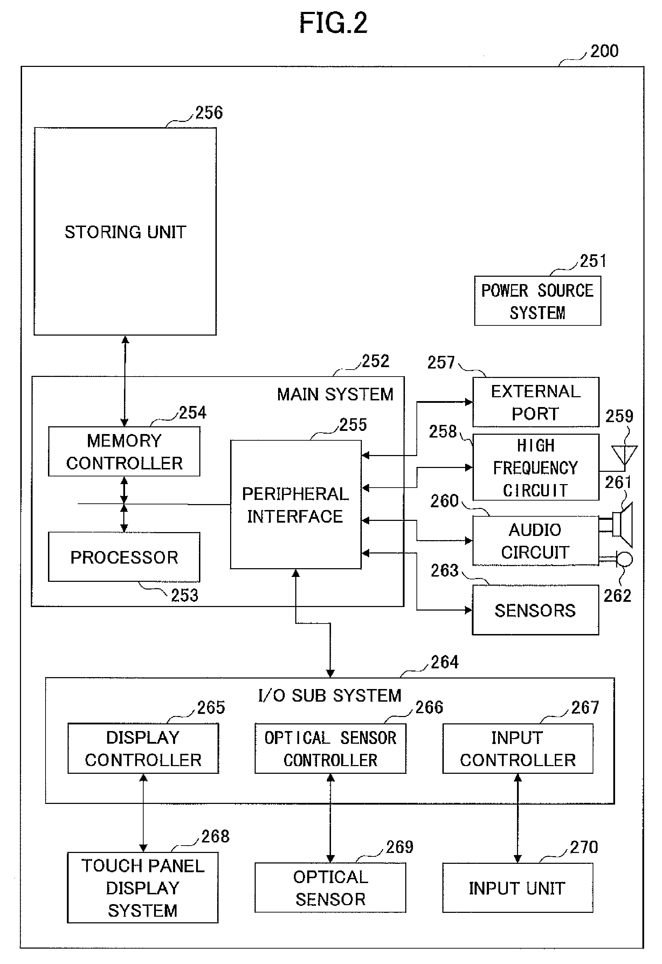

Fig. 2 is a view illustrating an example of a hardware structure of the mobile terminal 200 of the embodiment. The mobile terminal 200 includes a power source system 251, a main system 252 including a processor 253, a memory controller 254 and a peripheral interface 255, a storing unit 256, an external port 257, a high frequency circuit 258, an antenna 259, an audio circuit 260, a speaker 261, a microphone 262, sensors 263, an I/O (Input/Output) sub system 264 including a display controller 265, an optical sensor controller 266 and an input controller 267, a touch panel display system 268, an optical sensor 269 and an input unit 270. Although not illustrated in detail, the sensors 263 may include a proximity sensor, a Global Positioning System (GPS) circuit, an accelerometer, a gyroscope, a magnetometer, a luminosity sensor and the like.

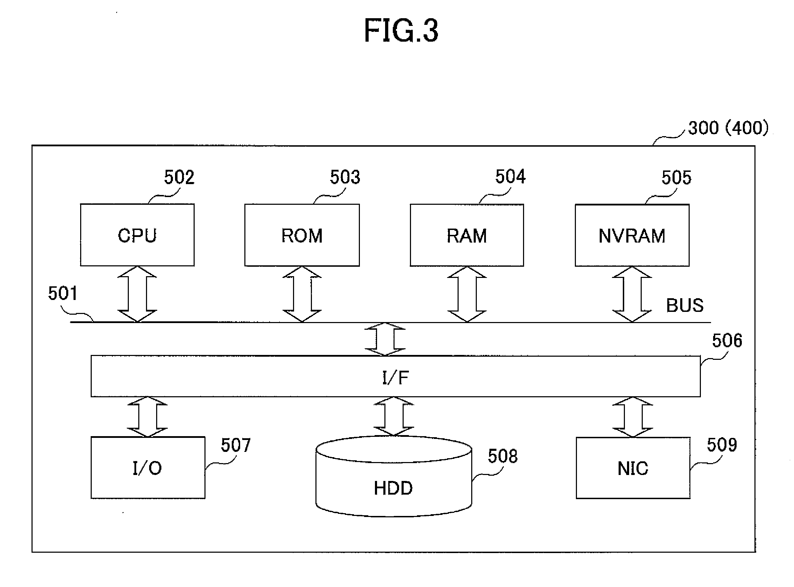

Fig. 3 is a view illustrating an example of a hardware structure of the set-top box terminal 300 or the web server 400. The set-top box terminal 300 (or the web server 400) includes a CPU (Central Processing Unit) 502, a ROM (Read Only Memory) 503, a RAM (Random Access Memory) 504, an NVRAM (Non-Volatile Random Access Memory) 505 and an I/F (Interface) 506 connected to a system bus 501, an I/O (Input/Output Device) 507 for a keyboard, a mouse, a monitor, a CD/DVD (Compact Disk/Digital Versatile Disk) drive or the like, an HDD (Hard Disk Drive) 508 and an NIC (Network Interface Card) 509 connected to the I/F 506, and the like.

Referring back to Fig. 1, the mobile terminal 200 includes a communication control unit 210, a physical data obtaining unit 52, an application data obtaining unit 54 and a data storage 212. The functional units of the mobile terminal 200 are actualized by a device-side TV engagement application program installed in the mobile terminal 200 and running unobtrusively in the background.

The communication control unit 210 controls communications of the mobile terminal 200 with the set-top box terminal 300 or the web server 400.

The physical data obtaining unit 52 obtains physical data of a viewer (user), detected by the sensors 263 (see Fig. 2) or the like, such as movement of the viewer, orientation of the mobile terminal 200 along with a timeline, and the like. Further, the physical data obtaining unit 52 may obtain time, location, proximity of devices, network connections or the like.

The application data obtaining unit 54 obtains user application data of the viewer along with a timeline. Here, the user application data may include communication data of the viewer, an application program or the like that relates to a TV program or the like. Specifically, the user application data may be obtained from the viewer's speech detected by the microphone 262. In such a case, the application data obtaining unit 54 may have a voice recognition function. Alternatively or additionally, the user application data may be obtained from the viewer's activity tracked through monitoring foreground application programs executed in the mobile terminal 200 such as a web browser, e-mail, social networking (Twitter, Facebook or the like) or the like. In such a case, the application data obtaining unit 54 obtains the user application data sent via the communication control unit 210. Further, the application data obtaining unit 54 may obtain social networking data by accessing the REST APIs provides by the web platforms of Twitter, Facebook, or the like.

The data storage 212 stores various data obtained by the communication control unit 210, the physical data obtaining unit 52 and the application data obtaining unit 54.

Specifically, the communication control unit 210 receives an instruction to start monitoring the viewer from the set-top box terminal 300. Upon receiving the instruction from the monitoring control unit 20, the device-side TV engagement application program installed in the mobile terminal 200 enters an active monitoring mode. At this time, the physical data obtaining unit 52 and the application data obtaining unit 54 obtain the respective data and periodically store respective obtained data in the data storage 212 along with the timeline.

Alternatively, the device-side TV engagement application program installed in the mobile terminal 200 may enter the active monitoring mode when the viewer is detected to be at home or in proximity of a TV set by the sensors 263 or the like.

On the other hand, when the user is away from home, the device-side TV engagement application program installed in the mobile terminal 200 is dormant. Further, in the case when movement (or other activity) of the mobile terminal 200 is not detected for a predetermined period, the device-side TV engagement application program installed in the mobile terminal 200 is dormant until the movement (or other activity) is detected.

Then, the communication control unit 210 periodically sends the data, such as the data obtained by the physical data obtaining unit 52 and the application data obtaining unit 54, stored in the data storage 212 to the set-top box terminal 300.

The set-top box terminal 300 includes a communication control unit 310, a monitoring control unit 20, a physical data analyzing unit 12, an application data analyzing unit 14, a TV data obtaining unit, a viewer engagement estimating unit 18 and a data storage 312. The functional units of the set-top box terminal 300 are actualized by an estimation-side TV engagement application program installed in the set-top box terminal 300.

The communication control unit 310 controls communications of the set-top box terminal 300 with the mobile terminal 200 or the web server 400. Specifically, the communication control unit 310 receives the physical data and the user application data respectively obtained by the physical data obtaining unit 52 and the application data obtaining unit 54 from the mobile terminal 200.

The monitoring control unit 20 determines timing when the viewer starts watching a TV program and sends an instruction to start monitoring of the viewer to the mobile terminal 200. For example, when the set-top box terminal 300 is switched on, the monitoring control unit 20 determines that the viewer starts watching a TV program.

The TV data obtaining unit 16 obtains TV data regarding a target TV program. The TV data may be obtained from DVB-SI, EPG sources, web sources or the like. The TV data may include a title of the TV program, names of staff members regarding the TV program such as actors, actresses, directors or the like. The TV data obtaining unit 16 extracts TV content metadata from the TV data along with a timeline.

The physical data analyzing unit 12 analyzes the physical data sent from the mobile terminal 200 and determines a condition of the physical data.

The condition of the physical data may include a condition of the viewer (sitting, moving or the like), a condition of the mobile terminal 200 (orientation or the like) and a condition of a relationship between the viewer and the mobile terminal 200 (whether the viewer is using the mobile terminal 200 or the like).

The application data analyzing unit 14 analyzes the user application data sent from the mobile terminal 200 and determines a condition of the user application data as a condition of the user application data.

Specifically, the application data analyzing unit 14 determines whether the user application data sent from the mobile terminal 200 relates to the target TV program by comparing the user application data and the metadata extracted from the TV data along with the timeline. For example, when the user application data sent from the mobile terminal 200 includes keywords related to the target TV program, the application data analyzing unit 14 determines that the user application data sent from the mobile terminal 200 relates to the target TV program.

The viewer engagement estimating unit 18 determines a level of engagement with the TV program of the viewer based on the conditions of the physical data and the user application data analyzed by the physical data analyzing unit 12 and the application data analyzing unit 14. At this time, a semantic model such as a W3C Web Ontology Language (OWL) may be used. As an example, the model could define that the necessary and sufficient conditions are that the viewer is at home, the viewer is in the lounge, the TV is on, the viewer has selected a certain channel at a certain time recognized as a learned activity pattern, and the viewer has tweeted a recognized program related keyword.

In this embodiment, the data storage 312 stores a condition table in which conditions of the physical data and the user application data are associated with a level of engagement with a TV program of a viewer.

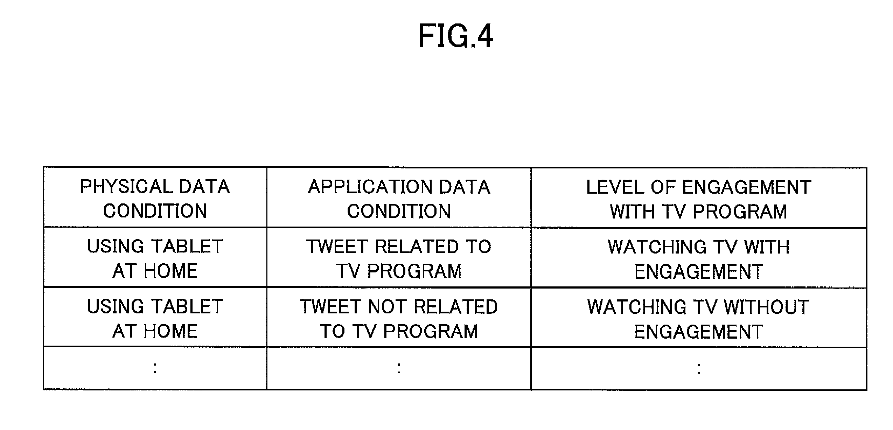

Fig. 4 is a view illustrating an example of the condition table stored in the data storage 312. The condition table stores items such as "physical data condition", "application data condition", "level of engagement with TV program" and the like.

The "physical data condition" indicates a condition of the physical data. The "application data condition" indicates a condition of the user application data. The "level of engagement with TV program" indicates a level of engagement with a TV program of a viewer.

Referring back to Fig. 1, the viewer engagement estimating unit 18 estimates the level of engagement with the TV program of the viewer based on the conditions of the physical data and the user application data obtained by the physical data analyzing unit 12 and the application data analyzing unit 14, respectively, by referring to the condition table stored in the data storage 312. Specifically, the viewer engagement estimating unit 18 estimates the level of engagement with the TV program of the viewer with which the physical data condition and the application data condition are associated in the condition table.

For the case illustrated in Fig. 4, the viewer engagement estimating unit 18 estimates that the viewer is "watching TV with engagement" when the physical data condition indicates that the viewer is "using tablet at home" and the application data condition indicates that the user application data is "tweet related to TV program". On the other hand, the viewer engagement estimating unit 18 estimates that the viewer is "watching TV without engagement" when the physical data condition indicates that the viewer is "using tablet at home" but the application data condition indicates that the user application data is "tweet not related to TV program".

Alternatively, as an example, the condition table may store conditions such as "a viewer is at home in the lounge", "the viewer is sitting down", "the TV is on" and "the viewer has selected a certain channel at a certain time recognized as a learned activity pattern" as the "physical data condition". Further, the condition table may store a condition such as "the viewer has tweeted a recognized program related keyword" as the "application data condition". Then, the condition table may associate these conditions with "watching TV with engagement" as the "level of engagement with TV program".

Alternatively, in such a case, each of the conditions may be associated with points indicating how the respective condition contributes to determine that the viewer is "watching TV with engagement". Then, whether the viewer is "watching TV with engagement" may be determined based on the total points added for the conditions applied for the viewer.

Further, the data storage 312 stores various data obtained by the communication control unit 310, the monitoring control unit 20, the physical data analyzing unit 12, the application data analyzing unit 14, the TV data obtaining unit and the viewer engagement estimating unit 18.

The communication control unit 310 sends the level of engagement with the TV program of the viewer to the web server 400. The web server 400 includes a communication control unit 410 and a data storage 412.

When the communication control unit 310 of the set-top box terminal 300 sends the level of engagement with the TV program of the viewer to the web server 400, the communication control unit 310 sends a viewer ID and a TV program ID with the level of engagement with the TV program. The data storage 412 includes an estimated data storage that stores the level of engagement with the TV program of a plurality of the viewers in correspondence with the viewer ID and the TV program ID.

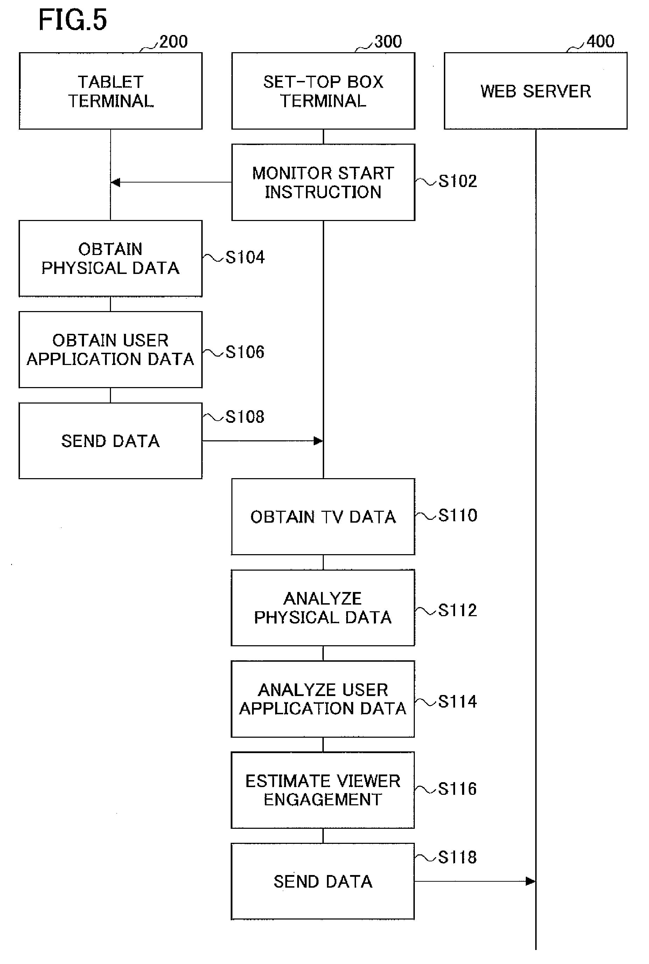

Fig. 5 is a sequence diagram illustrating an example of a process of the embodiment.

When the monitoring control unit 20 of the set-top box terminal 300 sends a monitor start instruction to the mobile terminal 200 (step S102), in the mobile terminal 200, the physical data obtaining unit 52 starts obtaining physical data (step S104) and the application data obtaining unit 54 starts obtaining user application data (step S106). The data obtained by the physical data obtaining unit 52 and the application data obtaining unit 54 are sent to the set-top box terminal 300 (step S108) after being temporarily stored in the data storage 212.

Meanwhile, in the set-top box terminal 300, the TV data obtaining unit 16 obtains TV data of a taget TV program (step S110). Further, upon receiving the physical data and the user application data from the mobile terminal 200, the physical data analyzing unit 12 and the application data analyzing unit 14 analyze the physical data and the user application data, respectively (step S112, step S114). The TV data obtained by the TV data obtaining unit 16, the data analyzed by the physical data analyzing unit 12 and the application data analyzing unit 14, respectively, are appropriately sent to the viewer engagement estimating unit 18. Further, although steps S104 and S106, or the steps S110, S112 and S114 are illustrated in this order, respectively, in Fig. 5, the order may be arbitrarily changed.

Thereafter, the viewer engagement estimating unit 18 estimates the level of engagement with the target TV program of the viewer based on the conditions of the physical data and the user application data obtained by the physical data analyzing unit 12 and the application data analyzing unit 14, respectively, by referring to the condition table stored in the data storage 312 (step S116). Then, the viewer engagement estimating unit 18 sends the level of engagement with the target TV program of the viewer (including the viewer ID, the TV program ID and the like) (step S118).

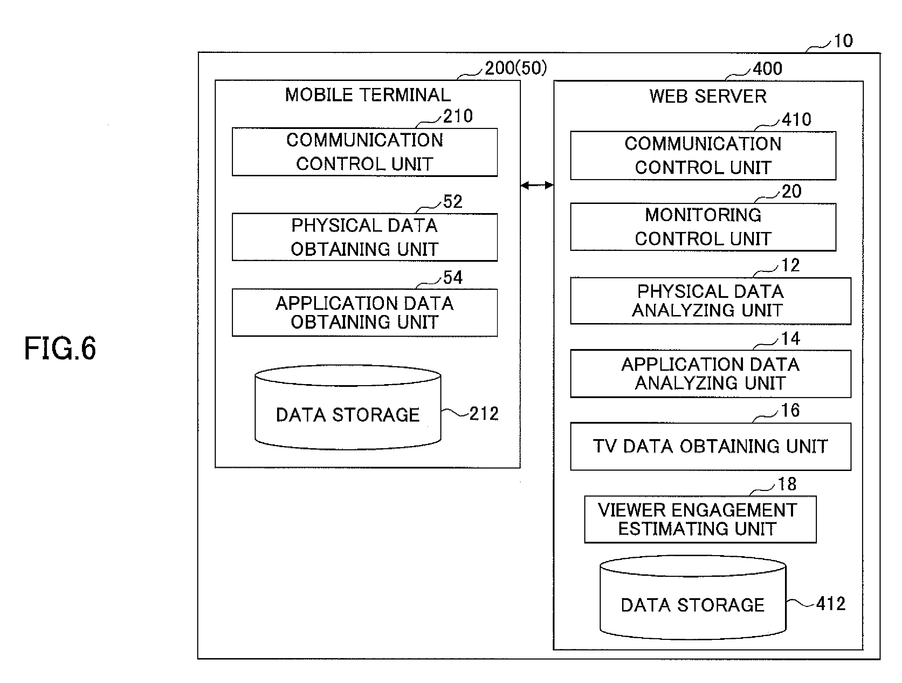

Fig. 6 is a block diagram illustrating another example of a functional structure of the viewer engagement estimating system 10 of the embodiment.

In this example, the viewer engagement estimating system 10 does not include the set-top box terminal 300. In this example, the estimation-side TV engagement application program is installed in the web server 400. Then, the web server 400 functions to estimate the level of engagement with a TV program of a viewer.

The web server 400 includes the monitoring control unit 20, the physical data analyzing unit 12, the application data analyzing unit 14, the TV data obtaining unit 16 and the viewer engagement estimating unit 18. Further, the data storage 412 stores the above described condition table in addition to the estimated data storage.

In this example, for example, the microphone 262 of the mobile terminal 200 may capture a sound at the viewer side 50 when the user is at home or the like and send the sound to the web server 410. Then, the monitoring control unit 20 of the web server 410 may detect that the viewer is watching a target TV program by correlating the sound sent from the mobile terminal 200 with known program audio (or video) streams. Web-based EPG sources are exploited for the requisite program metadata.

According to the embodiment, by combining the features available from the physical sensors with semantic information on the user's activity and social interactions, a better model of conscious user engagement is achieved.

Although a preferred embodiment of the viewer engagement estimating system has been specifically illustrated and described, it is to be understood that minor modifications may be made therein without departing from the spirit and scope of the invention as defined by the claims.

The individual constituents of the viewer engagement estimating system 10 may be embodied by arbitrary combinations of hardware and software, typified by a CPU of an arbitrary computer, a memory, a program loaded in the memory so as to embody the constituents illustrated in the drawings, a storage unit for storing the program such as a hard disk, and an interface for network connection. It may be understood by those skilled in the art that methods and devices for the embodiment allow various modifications.

The present invention is not limited to the specifically disclosed embodiments, and variations and modifications may be made without departing from the scope of the present invention.

For example, the physical data analyzing unit 12 may also obtain status of the viewer regarding the TV program such as whether the viewer is zapping, the viewer has selected a channel and remained there, or the like. This status may be used as the "physical data condition".

Further, the viewer engagement estimating system 10 may store viewer habits by storing viewer activities regarding TV programs and identify regular patterns of the viewer such as a regular pattern of watching the same program in the same timeslot every week or the like. Then, these regular patterns may be used as the "application data condition".

## Claims

1. A viewer engagement estimating system comprising:
a physical data analyzing unit that analyzes physical data obtained by a sensor included in a mobile terminal of a viewer of a TV program to determine a condition of the physical data;
an application data analyzing unit that analyzes user application data handled by the viewer of the TV program through the mobile terminal while the TV program is being broadcasted to determine a condition of user application data; and
a viewer engagement estimating unit that estimates a level of engagement with the TV program of the viewer based on the conditions of the physical data and the user application data analyzed by the physical data analyzing unit and the application data analyzing unit, respectively.

2. The viewer engagement estimating system according to claim 1,
wherein the physical data analyzing unit determines a condition of the viewer, a condition of the mobile terminal or a condition of a relationship between the viewer and the mobile terminal based on the physical data, as the condition of the physical data.

3. The viewer engagement estimating system according to claim 1, further comprising:
a TV data obtaining unit that obtains TV data regarding the TV program, and
wherein the application data analyzing unit determines whether the user application data sent from the mobile terminal relates to the TV program by comparing the user application data and metadata extracted from the TV data obtained by the TV data obtaining unit, as the condition of the user application data.

4. The viewer engagement estimating system according to claim 1, further comprising:
a condition table in which conditions of the physical data and the user application data are associated with a level of engagement with the TV program of the viewer, and
wherein the viewer engagement estimating unit estimates the level of engagement with the TV program of the viewer by referring to the condition table.

5. The viewer engagement estimating system according to claim 1,
wherein the user application data handled by the viewer of the TV program is obtained from the viewer's activity tracked through monitoring foreground application programs executed in the mobile terminal such as a web browser, e-mail, or social networking.

6. A method of estimating a viewer engagement, comprising:
analyzing physical data obtained by a sensor included in a mobile terminal of a viewer of a TV program to determine a condition of the physical data;
analyzing user application data handled by the viewer of the TV program through the mobile terminal while the TV program is being broadcasted to determine a condition of application data; and
estimating a level of engagement with the TV program of the viewer based on the conditions of the physical data and the user application data analyzed in the analyzing physical data and in the analyzing user application data, respectively.

7. The method of estimating the viewer engagement according to claim 6,
wherein in the analyzing the physical data, a condition of the viewer, a condition of the mobile terminal or a condition of a relationship between the viewer and the mobile terminal is determined based on the physical data, as the condition of the physical data.

8. The method of estimating the viewer engagement according to claim 6, further comprising:
obtaining TV data regarding the TV program, and
wherein in the analyzing the user application data, whether the user application data sent from the mobile terminal relates to the TV program by comparing the user application data and metadata extracted from the TV data obtained by the TV data obtaining unit is determined, as the condition of the user application data.

9. The method of estimating the viewer engagement according to claim 6,
wherein in the estimating the level of engagement, the level of engagement with the TV program of the viewer is estimated by referring to a condition table in which conditions of the physical data and the user application data are associated with a level of engagement with the TV program of the viewer.

10. The method of estimating the viewer engagement according to claim 6,
wherein in the analyzing the user application data, the user application data handled by the viewer of the TV program is obtained from the viewer's activity tracked through monitoring foreground application programs executed in the mobile terminal such as a web browser, e-mail, or social networking.

11. Computer program product downloadable from a communication network and/or recorded on a medium readable by computer and/or executable by a processor, comprising program code instructions for implementing the method according to at least one of claims 6 to 10.

12. Non-transitory computer-readable medium comprising a computer program product recorded thereon and capable of being run by a processor, including program code instructions for implementing the method according to at least one of claims 6 to 10.
